(19) Europäisches Patentamt
European Patent Office
Office européen des brevets

(11) EP 4 780 101 A1

(12) EUROPEAN PATENT APPLICATION
published in accordance with Art. 153(4) EPC

(43) Date of publication:
22.07.2026 Bulletin 2026/30

(21) Application number: 23956534.4

(22) Date of filing: 27.10.2023

(51) International Patent Classification (IPC):
*H04W 72/044* (2023.01)

(52) Cooperative Patent Classification (CPC):
H04W 72/044

(86) International application number:
PCT/CN2023/127345

(87) International publication number:
WO 2025/086294 (01.05.2025 Gazette 2025/18)

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
KH MA MD TN

(71) Applicant: HUAWEI TECHNOLOGIES CO., LTD.
Shenzhen 518129 (CN)

(72) Inventors:
• WANG, Lei
Shenzhen, Guangdong 518129 (CN)
• BI, Xiaoyan
Shenzhen, Guangdong 518129 (CN)

(74) Representative: Pfenning, Meinig & Partner mbB
Patent- und Rechtsanwälte
Theresienhöhe 11a
80339 München (DE)

(54) **COMMUNICATION METHOD AND COMMUNICATION APPARATUS**

(57) Embodiments of the present disclosure relate to a communication method and a communication apparatus. The communication method includes: A terminal device receives, from a first network device, a parameter for a direction of an uplink transmission beam. The parameter is associated with a downlink transmission beam of the first network device. The communication method further includes: The terminal device determines, based on at least the downlink transmission beam and the parameter, the uplink transmission beam for transmitting an uplink signal to a second network device. The second network device has a wireless uplink reception function and is connected to the first network device in a wired manner. With the communication method, the uplink transmission beam of the terminal device may be aligned with a UL-Only node, thereby resolving a problem of uplink beam management in a scenario in which the UL-Only node exists.

FIG. 3

## Description

### TECHNICAL FIELD

Embodiments of the present disclosure relate to the communication field, and more specifically, to a communication method and a communication apparatus.

### BACKGROUND

In a cellular system, cell-edge users suffer from a significant path loss and are limited by an uplink transmit power, making coverage performance for the edge users a bottleneck of the system. To improve the performance for the cell-edge users, reducing a cell radius (that is, densely deploying sites) is one of the most direct and highly effective means.

However, dense site deployment brings two new problems: Inter-cell interference increases, and methods such as complex inter-cell coordination and joint processing are required to reduce the impact.

To reduce interference and costs, and effectively improve uplink coverage, deployment of a plurality of small Uplink (Uplink, UL)-Only receiving nodes (also referred to as "UL-Only" nodes) may be considered. The UL-Only nodes have only a function of uplink reception and are connected to a base station in a wired manner. The UL-Only nodes do not actively transmit any signals, and therefore contribute to no additional network interference. Because no transmit radio frequency link is required, costs of the UL-Only nodes are also greatly reduced. When the UL-Only nodes are deployed, how to determine an uplink transmission beam of a terminal device needs to be studied.

### SUMMARY

The present disclosure provides a solution for communication.

According to a first aspect of the present disclosure, a communication method is provided. The method includes: A terminal device receives, from a first network device, a parameter for a direction of an uplink transmission beam, where the parameter is associated with a downlink transmission beam of the first network device; and the terminal device determines, based on at least the downlink transmission beam and the parameter, the uplink transmission beam for transmitting an uplink signal to a second network device. The second network device has a wireless uplink reception function and is connected to the first network device in a wired manner. With the method, the uplink transmission beam of the terminal device may be aligned with a UL-Only node, thereby resolving a problem of uplink beam management in a scenario in which the UL-Only node exists.

In some embodiments, the parameter for the direction of the uplink transmission beam includes one of the following: an offset of a second downlink reference signal corresponding to the uplink transmission beam relative to a first downlink reference signal corresponding to the downlink transmission beam, and an offset of the direction of the uplink transmission beam relative to a direction of the downlink transmission beam.

In some embodiments, the offset of the second downlink reference signal relative to the first downlink reference signal includes one of the following: an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

In some embodiments, the parameter for the direction of the uplink transmission beam indicates one of the following: a second downlink reference signal corresponding to the uplink transmission beam, and the direction of the uplink transmission beam.

In some embodiments, the parameter for the direction of the uplink transmission beam indicates the second downlink reference signal corresponding to the uplink transmission beam by one of the following: a sequence number of the second downlink reference signal, a resource parameter of the second downlink reference signal, and a generation parameter of the second downlink reference signal.

In some embodiments, each of the first downlink reference signal and the second downlink reference signal includes one of the following: a synchronization signal and physical broadcast channel block, and a channel state information reference signal.

According to a second aspect of the present disclosure, a communication method is provided. The method includes: A first network device sends, to a terminal device, a parameter for a direction of an uplink transmission beam, where the parameter is associated with a downlink transmission beam of the first network device; a second network device receives, from the terminal device, an uplink signal transmitted by using the uplink transmission beam, where the second network device has a wireless uplink reception function and is connected to the first network device in a wired manner; and the second network device forwards the uplink signal to the first network device. With the method, the uplink transmission beam of the terminal device may be aligned with a UL-Only node, thereby resolving a problem of uplink beam management in a scenario in which the UL-Only node exists.

In some embodiments, the parameter for the direction of the uplink transmission beam includes one of the following: an offset of a second downlink reference signal corresponding to the uplink transmission beam relative to a first downlink reference signal corresponding to the downlink transmission beam, and an offset of the direction of the uplink transmission beam relative to a direction of the downlink transmission beam.

In some embodiments, the offset of the second downlink reference signal relative to the first downlink reference signal includes one of the following: an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

In some embodiments, the parameter for the direction of the uplink transmission beam indicates one of the following: a second downlink reference signal corresponding to the uplink transmission beam, and the direction of the uplink transmission beam.

In some embodiments, the parameter for the direction of the uplink transmission beam indicates the second downlink reference signal corresponding to the uplink transmission beam by one of the following: a sequence number of the second downlink reference signal, a resource parameter of the second downlink reference signal, and a generation parameter of the second downlink reference signal.

In some embodiments, each of the first downlink reference signal and the second downlink reference signal includes one of the following: a synchronization signal and physical broadcast channel block, and a channel state information reference signal.

According to a third aspect of the present disclosure, a communication apparatus is provided. The communication apparatus includes a transceiver unit and a processing unit. The transceiver unit is configured to receive, from a first network device, a parameter for a direction of an uplink transmission beam. The parameter is associated with a downlink transmission beam of the first network device. The processing unit is configured to determine, based on at least the downlink transmission beam and the parameter, the uplink transmission beam for transmitting an uplink signal to a second network device. The second network device has a wireless uplink reception function and is connected to the first network device in a wired manner. With the communication apparatus, the uplink transmission beam of the terminal device may be aligned with a UL-Only node, thereby resolving a problem of uplink beam management in a scenario in which the UL-Only node exists.

In some embodiments, the parameter for the direction of the uplink transmission beam includes one of the following: an offset of a second downlink reference signal corresponding to the uplink transmission beam relative to a first downlink reference signal corresponding to the downlink transmission beam, and an offset of the direction of the uplink transmission beam relative to a direction of the downlink transmission beam.

In some embodiments, the offset of the second downlink reference signal relative to the first downlink reference signal includes one of the following: an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

In some embodiments, the parameter for the direction of the uplink transmission beam indicates one of the following: a second downlink reference signal corresponding to the uplink transmission beam, and the direction of the uplink transmission beam.

In some embodiments, the parameter for the direction of the uplink transmission beam indicates the second downlink reference signal corresponding to the uplink transmission beam by one of the following: a sequence number of the second downlink reference signal, a resource parameter of the second downlink reference signal, and a generation parameter of the second downlink reference signal.

In some embodiments, each of the first downlink reference signal and the second downlink reference signal includes one of the following: a synchronization signal and physical broadcast channel block, and a channel state information reference signal.

According to a fourth aspect of the present disclosure, a communication apparatus is provided. The communication apparatus includes a processing unit and a transceiver unit. The processing unit is configured to determine a parameter for a direction of an uplink transmission beam. The parameter is associated with a downlink transmission beam of a first network device. The transceiver unit is configured to send, to a terminal device, the parameter for the direction of the uplink transmission beam. With the communication apparatus, the uplink transmission beam of the terminal device may be aligned with a UL-Only node, thereby resolving a problem of uplink beam management in a scenario in which the UL-Only node exists.

In some embodiments, the parameter for the direction of the uplink transmission beam includes one of the following: an offset of a second downlink reference signal corresponding to the uplink transmission beam relative to a first downlink reference signal corresponding to the downlink transmission beam, and an offset of the direction of the uplink transmission beam relative to a direction of the downlink transmission beam.

In some embodiments, the offset of the second downlink reference signal relative to the first downlink reference signal includes one of the following: an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

In some embodiments, the parameter for the direction of the uplink transmission beam indicates one of the following: a second downlink reference signal corresponding to the uplink transmission beam, and the direction of the uplink transmission beam.

In some embodiments, the parameter for the direction of the uplink transmission beam indicates the second downlink reference signal corresponding to the uplink transmission beam by one of the following: a sequence number of the second downlink reference signal, a resource parameter of the second downlink reference signal, and a generation parameter of the second downlink reference signal.

In some embodiments, each of the first downlink reference signal and the second downlink reference signal includes one of the following: a synchronization signal and physical broadcast channel block, and a channel state information reference signal.

According to a fifth aspect of the present disclosure, a communication device is provided. The communication device includes a processor and a memory. The memory includes computer program code. When the computer program code is run by the processor, the method according to any one of the first aspect and the second aspect is caused to be performed.

According to a sixth aspect of the present disclosure, a computer-readable storage medium is provided. The computer-readable storage medium stores a computer program, and when the computer program is executed by a processor, the method according to any one of the first aspect and the second aspect is implemented.

According to a seventh aspect of the present disclosure, a chip is provided. The chip includes a processing circuit, and the processing circuit is configured to cause the method according to any one of the first aspect and the second aspect to be performed.

According to an eighth aspect of the present disclosure, a computer program product is provided. The computer program product is tangibly stored in a computer-readable medium and includes computer-executable instructions. When the computer-executable instructions are executed, a device is caused to implement the method according to any one of the first aspect and the second aspect.

According to a ninth aspect of the present disclosure, a communication system is provided. The communication system includes the communication apparatus according to the third aspect and the communication apparatus according to the fourth aspect.

According to a tenth aspect of the present disclosure, a communication method is provided. The method includes: A terminal device receives, from a first network device, a parameter for a direction of an uplink transmission beam, where the parameter is associated with a first downlink reference signal corresponding to a downlink transmission beam of the first network device; and the terminal device determines, based on at least the first downlink reference signal and the parameter, the uplink transmission beam for transmitting an uplink signal to a second network device. The second network device has a wireless uplink reception function and is connected to the first network device in a wired manner. With the method, the uplink transmission beam of the terminal device may be aligned with a UL-Only node, thereby resolving a problem of uplink beam management in a scenario in which the UL-Only node exists.

In some embodiments, the parameter for the direction of the uplink transmission beam includes one of the following: an offset of a second downlink reference signal corresponding to the uplink transmission beam relative to the first downlink reference signal corresponding to the downlink transmission beam, and an offset of the direction of the uplink transmission beam relative to a direction of the downlink transmission beam.

In some embodiments, the offset of the second downlink reference signal relative to the first downlink reference signal includes one of the following: an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

In some embodiments, the parameter for the direction of the uplink transmission beam indicates one of the following: a second downlink reference signal corresponding to the uplink transmission beam, and the direction of the uplink transmission beam.

In some embodiments, the parameter for the direction of the uplink transmission beam indicates the second downlink reference signal corresponding to the uplink transmission beam by one of the following: a sequence number of the second downlink reference signal, a resource parameter of the second downlink reference signal, and a generation parameter of the second downlink reference signal.

In some embodiments, each of the first downlink reference signal and the second downlink reference signal includes one of the following: a synchronization signal and physical broadcast channel block, and a channel state information reference signal.

According to an eleventh aspect of the present disclosure, a communication method is provided. The method includes: A first network device sends, to a terminal device, a parameter for a direction of an uplink transmission beam, where the parameter is associated with a first downlink reference signal corresponding to a downlink transmission beam of the first network device; a second network device receives, from the terminal device, an uplink signal transmitted by using the uplink transmission beam, where the second network device has a wireless uplink reception function and is connected to the first network device in a wired manner; and the second network device forwards the uplink signal to the first network device. With the method, the uplink transmission beam of the terminal device may be aligned with a UL-Only node, thereby resolving a problem of uplink beam management in a scenario in which the UL-Only node exists.

In some embodiments, the parameter for the direction of the uplink transmission beam includes one of the following: an offset of a second downlink reference signal corresponding to the uplink transmission beam relative to the first downlink reference signal corresponding to the downlink transmission beam, and an offset of the direction of the uplink transmission beam relative to a direction of the downlink transmission beam.

In some embodiments, the offset of the second downlink reference signal relative to the first downlink reference signal includes one of the following: an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

In some embodiments, the parameter for the direction of the uplink transmission beam indicates one of the following: a second downlink reference signal corresponding to the uplink transmission beam, and the direction of the uplink transmission beam.

In some embodiments, the parameter for the direction of the uplink transmission beam indicates the second downlink reference signal corresponding to the uplink transmission beam by one of the following: a sequence number of the second downlink reference signal, a resource parameter of the second downlink reference signal, and a generation parameter of the second downlink reference signal.

In some embodiments, each of the first downlink reference signal and the second downlink reference signal includes one of the following: a synchronization signal and physical broadcast channel block, and a channel state information reference signal.

A twelfth aspect of this application provides a communication apparatus. The communication apparatus includes a processor. The processor is configured to invoke a computer program or computer instructions in a memory, so that the processor implements any one of the implementations according to any one of the first aspect, the second aspect, the tenth aspect, and the eleventh aspect.

Optionally, the communication apparatus further includes a transceiver, and the processor is configured to control the transceiver to receive or send a signal.

A thirteenth aspect of this application provides a communication apparatus. The communication apparatus includes a processor, and the processor is configured to perform any one of the implementations according to any one of the first aspect, the second aspect, the tenth aspect, and the eleventh aspect.

A fourteenth aspect of this application provides a computer program product including instructions. When the computer program product is run on a computer, the computer is caused to perform any one of the implementations according to any one of the first aspect, the second aspect, the tenth aspect, and the eleventh aspect.

A fifteenth aspect of this application provides a computer-readable storage medium, including computer instructions. When the instructions are run on a computer, the computer is caused to perform any one of the implementations according to any one of the first aspect, the second aspect, the tenth aspect, and the eleventh aspect.

A sixteenth aspect of this application provides a chip apparatus, including a processor, configured to invoke a computer program or computer instructions in a memory, so that the processor performs any one of the implementations according to any one of the first aspect, the second aspect, the tenth aspect, and the eleventh aspect.

Optionally, the processor is coupled to the memory through an interface.

A seventeenth aspect of this application provides a communication system. The communication system includes a terminal device and a network device. The terminal device is configured to perform any implementation shown in the first aspect, and the network device is configured to perform any implementation shown in the second aspect. Alternatively, the terminal device is configured to perform any implementation shown in the tenth aspect, and the network device is configured to perform any implementation shown in the eleventh aspect.

## BRIEF DESCRIPTION OF DRAWINGS

With reference to the accompanying drawings and the following detailed descriptions, the foregoing and other features, advantages, and aspects of embodiments of the present disclosure become more apparent. Several implementations of the present disclosure are shown herein by way of an example rather than a limitation. In the accompanying drawings:

FIG. 1 is a diagram of an existing communication system;
FIG. 2 is a diagram of a communication system in which some embodiments of the present disclosure may be applied;
FIG. 3 is a diagram of signaling interaction in a communication process according to some embodiments of the present disclosure;
FIG. 4, FIG. 5, FIG. 6, and FIG. 7 respectively show examples of a plurality of parameters for directions of a plurality of uplink transmission beams according to some embodiments of the present disclosure;
FIG. 8 is a flowchart of a communication method according to some embodiments of the present disclosure;
FIG. 9 is a flowchart of a communication method according to some other embodiments of the present disclosure;
FIG. 10 is a block diagram of a communication apparatus according to some embodiments of the present disclosure;
FIG. 11 is a block diagram of a communication apparatus according to some other embodiments of the present disclosure;
FIG. 12 is a diagram of a structure of a terminal device according to some embodiments of the present disclosure; and
FIG. 13 is a diagram of a structure of a network device according to some embodiments of the present disclosure.

## DESCRIPTION OF EMBODIMENTS

Embodiments of the present disclosure are described in more detail in the following with reference to the accompanying drawings. Although some embodiments of the present disclosure are shown in the accompanying drawings, it should be understood that the present disclosure can be implemented in various forms, and should not be construed as being limited to embodiments described herein. On the contrary, these embodiments are provided for a more thorough and complete understanding of the present disclosure. It should be understood that the accompanying drawings and embodiments of the present disclosure are merely used as examples and are not intended to limit the protection scope of the present disclosure.

In the present disclosure, the term "including" and similar terms thereof should be understood as non-exclusive inclusions, that is, "including but not limited to". The term "based on" should be understood as "at least partially based on". The term "one embodiment" or "this embodiment" should be understood as "at least one embodiment". The terms "first", "second", and the like may indicate different objects or a same object. The following may further include other explicit and implicit definitions.

It may be understood that "sending" and "receiving" in the present disclosure indicate a signal transfer direction. For example, "sending information to a terminal device" may be understood as that a destination end of the information is the terminal device, and may include direct sending through an air interface, or indirect sending through an air interface by another unit or module. "Receiving information from a network device" may be understood as that a source end of the information is the network device, and may include direct receiving from the network device through an air interface, or indirect receiving from the network device through an air interface from another unit or module. "Sending" may also be understood as "outputting" of a chip interface, and "receiving" may also be understood as "inputting" of the chip interface.

In other words, sending and receiving may be performed between devices, for example, between a network device and a terminal device; or may be performed inside a device, for example, sending or receiving is performed between components, modules, chips, software modules, or hardware modules inside the device through a bus, a cable, or an interface.

It may be understood that necessary processing, such as encoding and modulation, may be performed on information between a source end at which the information is sent and the destination end, but the destination end may understand valid information from the source end. Similar descriptions in the present disclosure may be understood similarly. Details are not described again.

The following describes a terminal device and a network device in the present disclosure.

The terminal device is also referred to as user equipment (user equipment, UE), a mobile station (mobile station, MS), a mobile terminal (mobile terminal, MT), customer premises equipment (customer premises equipment, CPE), or the like. The terminal device is a device that includes a wireless communication function (providing a user with voice/data connectivity), for example, a handheld device having a wireless connection function, a vehicle-mounted device, or a machine type communication (machine type communication, MTC) terminal. Currently, the terminal device may include: a mobile phone (mobile phone), a tablet computer, a notebook computer, a palmtop computer, a mobile internet device (mobile internet device, MID), a wearable device, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), or the like. For example, the wireless terminal in self-driving may be an uncrewed aerial vehicle, a helicopter, or an airplane. For example, a wireless terminal in vehicle-to-everything may be a vehicle-mounted device, an entire vehicle device, a vehicle-mounted module, a vehicle, or a ship. The wireless terminal in industrial control may be a camera, a robot, a robotic arm, or the like. The wireless terminal in the smart home may be a television, an air conditioner, a sweeper, a sound box, a set-top box, or the like.

It should be noted that the terminal device may be a device or an apparatus with a chip, a device or an apparatus integrated with a circuit, or a chip, a module, or a control unit in the device or the apparatus shown above. This is not specifically limited in the present disclosure.

The network device is a device that is deployed in a radio access network and that provides a wireless communication function for the terminal device. The network device may also be referred to as an access network (radio access network, RAN) entity, an access node, a network node, a communication apparatus, or the like.

Specifically, the network device may be an access network device in a cellular system related to the 3rd generation partnership project (3rd generation partnership project, 3GPP), for example, a $4^{th}$ generation ($4^{th}$ generation, 4G) mobile communication system or a 5G mobile communication system. Alternatively, the network device may be an access network device in an open radio access network (open RAN, O-RAN, or ORAN) or a cloud radio access network (cloud radio access network, CRAN). Alternatively, the network device may be an access network device in a communication system obtained by converging two or more of the foregoing communication systems.

The network device includes but is not limited to: an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), an access point (access point, AP) in a wireless fidelity (wireless fidelity, Wi-Fi) system, a macro base station, a micro base station, a wireless relay node, a donor node, a radio controller in a CRAN scenario, a wireless backhaul node, a transmission point (transmission point, TP), or a transmission reception point (transmission reception point, TRP). The network device may alternatively be an access network device in a 5G mobile communication system, for example, a next generation NodeB (next generation NodeB, gNB), a TRP, or a TP in a new radio (new radio, NR) system, or one antenna panel or a group of antenna panels (including a plurality of antenna panels) of a base station in a 5G mobile communication system. Alternatively, the network device may be a network node that forms a gNB or a transmission point, for example, a central unit (central unit, CU), a distributed unit (distributed unit, DU), a CU-control plane (control plane, CP), a CU-user plane (user plane, UP), or a radio unit (radio unit, RU). The CU and the DU may be separately disposed, or may be included in a same network element, for example, a BBU. The RU may be included in a radio frequency device or a radio frequency unit, for example, in a remote radio unit (remote radio unit, RRU), an active antenna processing unit (active antenna unit, AAU), or a remote radio head (remote radio head, RRH). Alternatively, the network device may be a server, a wearable device, a vehicle, a vehicle-mounted device, or the like. For example, the network device in a V2X technology may be a road side unit (road side unit, RSU).

It should be noted that in different systems, the CU (or the CU-CP and the CU-UP), the DU, or the RU may have different names, but persons skilled in the art may understand meanings of the names. For example, in an open access network (open radio access network, ORAN) system, the CU may also be referred to as an open central unit (open central unit, O-CU) or an open CU, the DU may also be referred to as an open distributed unit (open distributed unit, O-DU), the central unit-control plane (central unit-control plane, CU-CP) may also be referred to as an open central unit-control plane (open central unit-control plane, O-CU-CP) or an open CU-CP, the central unit-user plane (central unit-user plane, CU-UP) may also be referred to as an open central unit-user plane (open central unit-user plane, O-CU-UP) or an open CU-UP, and the RU may also be referred to as an open radio unit (open radio unit, O-RU). This is not specifically limited in the present disclosure. Any one of the CU, the CU-CP, the CU-UP, the DU, and the RU in the present disclosure may be implemented by a software module, a hardware module, or a combination of a software module and a hardware module.

Optionally, for network elements in the ORAN system, each network element may implement a protocol layer function shown in the following Table 1.

Table 1

| ORAN network element | Protocol layer function |
| --- | --- |
| O-CU-CP | Radio resource control (Radio Resource Control, RRC) and packet data convergence protocol control plane (packet data convergence protocol control plane, PDCP-C) |
| O-CU-UP | Service data adaptation protocol (service data adaptation protocol, SDAP) and packet data convergence protocol user plane (packet data |
| ORAN network element | Protocol layer function convergence protocol user plane, PDCP-U) |
| O-DU | Radio link control (radio link control, RLC), media access control (Media Access Control, MAC), and high physical (Physical, PHY) layer (PHY-high) |

(continued)

| ORAN network element | Protocol layer function |
|---|---|
| O-RU | Low physical layer (PHY-low) |

It should be noted that the network device may be one or more network elements shown in Table 1. This is not specifically limited in the present disclosure.

It should be noted that Table 1 is merely an example. In actual application, a protocol layer function supported by each network element is not limited. For example, each network element may support more protocol layer functions, or the protocol layer function supported by each network element is specifically configured based on an actual situation. This is not specifically limited in the present disclosure.

Architectures of the CU and the DU of the access network device are described below. The access network device includes at least one CU and at least one DU. Optionally, the access network device further includes at least one RU.

Descriptions are provided below by using an example in which the access network device includes one CU and one DU. The CU has some functions of a core network, and the CU may include a CU-CP and a CU-UP. The CU and the DU may be configured based on protocol layer functions of a wireless network that are implemented by the CU and the DU. For example, the CU is configured to implement functions of a PDCP layer and a protocol layer above the PDCP layer (for example, an RRC layer and/or an SDAP layer). The DU is configured to implement a function of a protocol layer below the PDCP layer (for example, an RLC layer, a MAC layer, and/or a PHY layer). For another example, the CU is configured to implement functions of protocol layers above a PDCP layer (for example, an RRC layer and/or an SDAP layer), and the DU is configured to implement functions of the PDCP layer and protocol layers below the PDCP layer (for example, an RLC layer, a MAC layer, and/or a PHY layer).

When the CU includes the CU-CP and the CU-UP, the CU-CP is configured to implement a control plane function of the CU, and the CU-UP is configured to implement a user plane function of the CU. For example, when the CU is configured to implement functions of the PDCP layer, the RRC layer, and the SDAP layer, the CU-CP is configured to implement the function of the RRC layer and a control plane function of the PDCP layer, and the CU-UP is configured to implement the function of the SDAP layer and a user plane function of the PDCP layer.

The CU-CP may perform interaction with a network element configured to implement a control plane function in the core network. The network element configured to implement the control plane function in the core network may be an access and mobility function network element, for example, an access and mobility management function (access and mobility management function, AMF) in the 5G mobile communication system. The access and mobility function network element is configured to be responsible for mobility management in a mobile network, for example, position update of a terminal device, network registration of the terminal device, and handover of the terminal device. The CU-UP may perform interaction with a network element configured to implement a user plane function in the core network. The network element configured to implement the user plane function in the core network, for example, a user function (user plane function, UPF) in the 5G mobile communication system, is configured to be responsible for forwarding and receiving data in the terminal device.

The foregoing configurations of the CU and the DU are merely examples. Alternatively, functions of the CU and the DU may be configured based on a requirement. For example, the CU or the DU may be configured to have functions of more protocol layers, or the CU or the DU may be configured to have a part of processing functions of protocol layers. For example, a part of functions of the RLC layer and functions of protocol layers above the RLC layer are set in the CU, and remaining functions of the RLC layer and functions of protocol layers below the RLC layer are set in the DU. For another example, division into functions of the CU or the DU may alternatively be performed based on service types or other system requirements. For example, division is performed based on a latency. Functions whose processing time needs to meet a small latency requirement are set in the DU, and functions whose processing time does not need to meet the latency requirement are set in the CU.

The DU and the RU may cooperate to jointly implement a function of the PHY layer. One DU may be connected to one or more RUs. Functions of the DU and the RU may be configured into a plurality of manners based on a design. For example, the DU is configured to implement a baseband function, and the RU is configured to implement intermediate frequency and radio frequency functions. For another example, the DU is configured to implement a higher-layer function of the PHY layer, and the RU is configured to implement a lower-layer function of the PHY layer or implement the lower-layer function and a radio frequency function. The higher-layer function of the physical layer may include a part of functions of the physical layer, and the part of functions are closer to the MAC layer. The lower-layer function of the physical layer may include another part of functions of the physical layer, and the part of functions are closer to an intermediate frequency and radio frequency side.

Optionally, the network device may alternatively be a core network device. The core network device is responsible for access control, registration management, service management, mobility management, and the like for the terminal device to access a network. Some embodiments of the present disclosure may relate to a beam. A beam may be represented in an NR protocol as a spatial domain filter (spatial domain filter), or referred to as a spatial filter (spatial filter), or referred to as a spatial domain parameter (spatial domain parameter), a spatial parameter (spatial parameter), a spatial domain setting (spatial domain setting), a spatial setting (spatial setting), quasi-colocation (Quasi-colocation, QCL) information, a QCL assumption, a QCL indication, or the like. The beam may be indicated by using a transmission configuration indicator state (transmission configuration indicator state, TCI-state) parameter or a spatial relation (spatial relation) parameter. Therefore, in the present disclosure, the beam may be replaced with a spatial domain filter, a spatial filter, a spatial domain parameter, a spatial parameter, a spatial domain setting, a spatial setting, QCL information, a QCL assumption, a QCL indication, a TCI-state (including a downlink (Downlink, DL) TCI-state and an uplink (Uplink, UL) TCI-state), a spatial relation, and the like. The foregoing terms are equivalent to each other. Alternatively, the beam may be replaced with another term for representing the beam. This is not limited in the present disclosure.

A beam for transmitting a signal may be referred to as a transmission beam (transmission beam, Tx beam), or may be referred to as a spatial domain transmission filter (spatial domain transmission filter), a spatial transmission filter (spatial transmission filter), a spatial domain transmission parameter (spatial domain transmission parameter), a spatial transmission parameter (spatial transmission parameter), a spatial domain transmission setting (spatial domain transmission setting), or a spatial transmission setting (spatial transmission setting). A downlink transmission beam may be indicated by using a TCI-state.

A beam for receiving a signal may be referred to as a reception beam (reception beam, Rx beam), or may be referred to as a spatial domain reception filter (spatial domain reception filter), a spatial reception filter (spatial reception filter), a spatial domain reception parameter (spatial domain reception parameter), a spatial reception parameter (spatial reception parameter), a spatial domain reception setting (spatial domain reception setting), or a spatial reception setting (spatial reception setting). An uplink transmission beam may be indicated by using a spatial relation (spatial relation), an uplink TCI-state, or a sounding reference signal (sounding reference signal, SRS) resource (indicating a transmission beam using the SRS). Therefore, the uplink beam may alternatively be replaced with the SRS resource.

The transmission beam may be distribution of signal strength formed in different directions in space after a signal is transmitted through an antenna, and the reception beam may be distribution of signal strength, in different directions in space, of a radio signal received from an antenna.

In addition, the beam may be a wide beam, a narrow beam, or a beam of another type. A technology for forming the beam may be a beamforming technology or another technology. The beamforming technology may be specifically a digital beamforming technology, an analog beamforming technology, a hybrid digital/analog beamforming technology, or the like.

The beam usually corresponds to a resource. For example, during beam measurement, the network device measures different beams by using different resources, the terminal device feeds back measured resource quality, and the network device knows quality of a corresponding beam. During data transmission, beam information is also indicated by using a resource corresponding to the beam information. For example, the network device indicates information about a physical downlink shared channel (physical downlink shared channel, PDSCH) beam to the terminal device by using a TCI field in downlink control information (downlink control information, DCI).

Optionally, a plurality of beams having same or similar communication features are considered as one beam. One beam may include one or more antenna ports, and is used to transmit a data channel, a control channel, a sounding signal, and the like. The one or more antenna ports forming the beam may also be considered as one antenna port set.

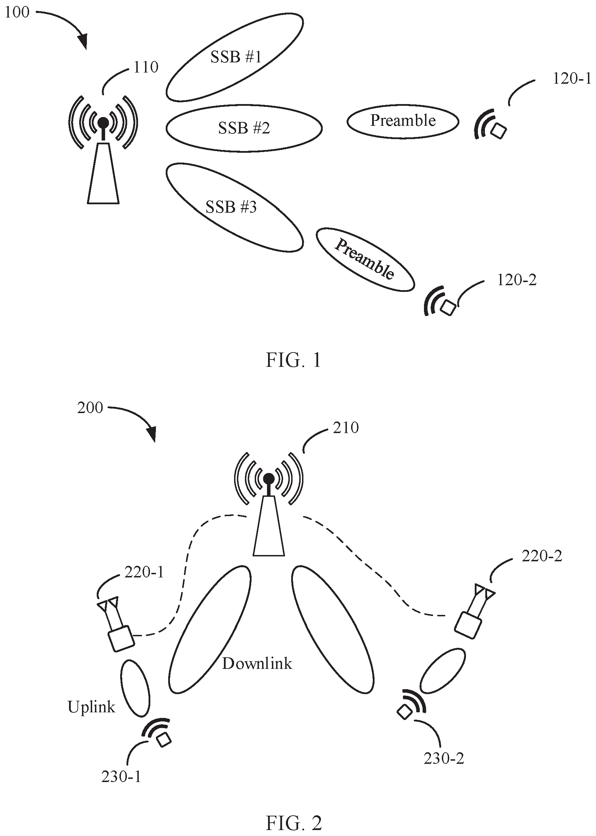

FIG. 1 is a diagram of an existing communication system 100. As shown in the figure, the communication system 100 includes terminal devices 120-1 and 120-2, and a network device 110. The terminal devices 120-1 and 120-2 are collectively referred to as a terminal device 120.

In an uplink random access process, the network device 110 transmits a plurality of synchronization signal and physical broadcast channel blocks (synchronization signal and physical broadcast channel (PBCH) blocks, SSBs) in a beam-sweeping manner. The terminal device 120 selects an SSB that meets a strength threshold, and sends a preamble (Preamble) by using a physical random access channel (physical random access channel, PRACH) resource associated with the SSB. A direction of a transmission beam for the preamble is aligned with a direction of a transmission beam for the SSB. The network device 110 receives the preamble on the PRACH resource by using a reception beam whose direction is aligned with the direction of the transmission beam for the SSB.

After the terminal device 120 accesses, the network device 110 may send channel state information reference signals (channel state information reference signals, CSI-RSs) corresponding to different beams. The terminal device 120 obtains corresponding beam information based on measurement of the CSI-RS.

As mentioned above, to reduce interference and costs, and effectively enhance uplink coverage, deployment of a plurality of UL-Only nodes may be considered. Due to a long distance between the network device and the UL-Only node, there is no reciprocity between uplink and downlink, and the terminal device cannot infer a transmission beam for an uplink signal based on a downlink reference signal (for example, an SSB or a CSI-RS).

For at least the foregoing problem and other potential related problems, embodiments of the present disclosure provide a communication solution. According to this solution, a terminal device receives, from a first network device, a parameter for a direction of an uplink transmission beam. The parameter is associated with a downlink transmission beam that is of the first network device and that is used for beam management. Further, the terminal device determines, based on at least the downlink transmission beam and the parameter, the uplink transmission beam for transmitting an uplink signal to a second network device. The second network device has a wireless uplink reception function and is connected to the first network device in a wired manner. With this solution, the uplink transmission beam of the terminal device may be aligned with a UL-Only node, thereby resolving a problem of uplink beam management in a scenario in which the UL-Only node exists.

In the following, some embodiments of the present disclosure are described with reference to FIG. 2 to FIG. 8.

FIG. 2 is a diagram of a communication system 200 in which some embodiments of the present disclosure may be applied. As shown in the figure, the communication system 200 includes a first network device 210, second network devices 220-1 and 220-2, and terminal devices 230-1 and 230-2. In the following, for a purpose of discussion, the second network devices 220-1 and 220-2 are collectively referred to as a second network device 220 or separately referred to as a second network device 220, and the terminal devices 230-1 and 230-2 are collectively referred to as a terminal device 230 or separately referred to as a terminal device 230.

The first network device 210 can communicate with the terminal device 230. That the first network device 210 sends control information and/or data to the terminal device 230 is referred to as downlink (Downlink, DL) communication, and that the terminal device 230 sends control information and/or data to the first network device 210 or the second network device 220 is referred to as uplink (Uplink, UL) communication.

The second network device 220 has a wireless uplink reception function and is connected to the first network device 210 in a wired manner.

In some embodiments, the second network device 220 may have only a wireless uplink reception function and be connected to the first network device 210 in a wired manner.

In some embodiments, the second network device 220 may not have a wireless transmission function and may be connected to the first network device 210 in a wired manner.

It may be understood that quantities of the first network device 210, the second network device 220, and the terminal device 230 shown in FIG. 2 are merely examples, and are not intended to impose any limitation. Based on an actual requirement, the communication system 200 may include any appropriate quantity of the first network device 210, the second network device 220, and the terminal device 230.

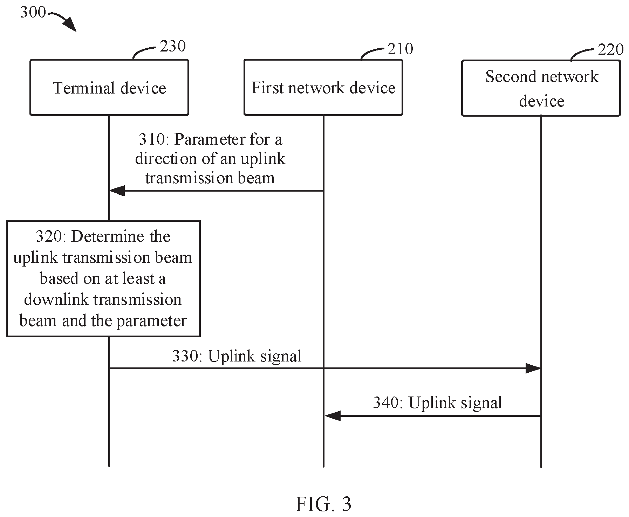

FIG. 3 is a diagram of signaling interaction in a communication process 300 according to some embodiments of the present disclosure. For a purpose of description, the communication process 300 is described with reference to the various elements shown in FIG. 2. However, it should be understood that the communication process 300 may alternatively be performed between a network device and a network device in any other communication scenario.

As shown in FIG. 3, the terminal device 230 receives, from the first network device 210, 310 a parameter for a direction of an uplink transmission beam. The parameter is associated with a downlink transmission beam of the first network device 210.

In some embodiments, the terminal device 230 may receive a radio resource control (Radio Resource Control, RRC) message from the first network device 210, and the RRC message may include the parameter for the direction of the uplink transmission beam.

Alternatively, in some embodiments, the terminal device 230 may receive DCI from the first network device 210, and the DCI may include the parameter for the direction of the uplink transmission beam.

Further, the terminal device 230 determines 320 the uplink transmission beam based on at least the downlink transmission beam and the parameter.

Then, the terminal device 230 sends 330 an uplink signal to the second network device 220 by using the uplink transmission beam. The second network device 220 has a wireless uplink reception function and is connected to the first network device 210 in a wired manner.

After receiving the uplink signal from the terminal device 230, the second network device 220 forwards 340 the uplink signal to the first network device 210.

With the communication process 300, the uplink transmission beam of the terminal device may be aligned with a UL-Only node, thereby resolving a problem of uplink beam management in a scenario in which the UL-Only node exists.

In some embodiments, the terminal device 230 may receive, from the first network device 210, mapping information between a plurality of parameters for directions of a plurality of uplink transmission beams and a plurality of downlink transmission beams of the first network device 210, where each parameter is associated with one downlink transmission beam of the first network device 210. Further, the terminal device 230 may determine, based on the mapping information and one of the plurality of downlink transmission beams, an uplink transmission beam corresponding to the downlink transmission beam.

Alternatively, in some embodiments, the terminal device 230 may receive, from the first network device 210, a plurality of parameters for directions of a plurality of uplink transmission beams and a plurality of downlink transmission beams of the first network device 210, where each parameter is associated with one downlink transmission beam of the first network device 210.

Alternatively, in some embodiments, the terminal device 230 may receive, from the first network device 210, mapping information between a plurality of parameters for directions of a plurality of uplink transmission beams and a plurality of downlink reference signals corresponding to a plurality of downlink transmission beams, where each parameter is associated with one downlink reference signal. Further, the terminal device 230 may determine, based on the mapping information and one of the plurality of downlink reference signals, a downlink reference signal corresponding to an uplink transmission beam, and then determine the uplink transmission beam.

Alternatively, in some embodiments, the terminal device 230 may receive, from the first network device 210, a plurality of parameters for directions of a plurality of uplink transmission beams and information about a plurality of downlink reference signals corresponding to a plurality of downlink transmission beams, where each parameter is associated with information about one downlink reference signal.

In some embodiments, the parameter for the direction of the uplink transmission beam may include an offset of a downlink reference signal (also referred to as a "second downlink reference signal") corresponding to the uplink transmission beam relative to a downlink reference signal (also referred to as a "first downlink reference signal") corresponding to the downlink transmission beam.

In some embodiments, the offset of the second downlink reference signal relative to the first downlink reference signal may include an offset of a sequence number of the second downlink reference signal relative to a sequence number of the first downlink reference signal. For example, the offset of the sequence number of the second downlink reference signal relative to the sequence number of the first downlink reference signal may include an offset of an index of the second downlink reference signal relative to an index of the first downlink reference signal. For another example, the offset of the sequence number of the second downlink reference signal relative to the sequence number of the first downlink reference signal may include an offset of a resource indicator of the second downlink reference signal relative to a resource indicator of the first downlink reference signal. For still another example, the offset of the sequence number of the second downlink reference signal relative to the sequence number of the first downlink reference signal may include an offset of a port number of the second downlink reference signal relative to a port number of the first downlink reference signal.

Alternatively, in some embodiments, the offset of the second downlink reference signal relative to the first downlink reference signal may include an offset of a resource parameter of the second downlink reference signal relative to a resource parameter of the first downlink reference signal. For example, the offset of the resource parameter of the second downlink reference signal relative to the resource parameter of the first downlink reference signal may include an offset of a time domain resource parameter of the second downlink reference signal relative to a time domain resource parameter of the first downlink reference signal. For another example, the offset of the resource parameter of the second downlink reference signal relative to the resource parameter of the first downlink reference signal may include an offset of a frequency domain resource parameter of the second downlink reference signal relative to a frequency domain resource parameter of the first downlink reference signal.

Alternatively, in some embodiments, the offset of the second downlink reference signal relative to the first downlink reference signal may include an offset of a generation parameter of the second downlink reference signal relative to a generation parameter of the first downlink reference signal. For example, the offset of the generation parameter of the second downlink reference signal relative to the generation parameter of the first downlink reference signal may include an offset of a cyclic shift value of the second downlink reference signal relative to a cyclic shift value of the first downlink reference signal. For another example, the offset of the generation parameter of the second downlink reference signal relative to the generation parameter of the first downlink reference signal may include an offset of a sequence generation parameter of the second downlink reference signal relative to a sequence generation parameter of the first downlink reference signal.

In some embodiments, a parameter related to the second downlink reference signal may be determined based on the following formula:

$$N = A + Offset \qquad\qquad (1)$$

Herein, N represents a parameter related to the second downlink reference signal, A represents a parameter related to the first downlink reference signal, and Offset represents an offset of the second downlink reference signal relative to the first downlink reference signal or an offset of the direction of the uplink transmission beam relative to a direction of the downlink transmission beam.

For example, the parameter (N) related to the second downlink reference signal may be the sequence number of the second downlink reference signal, the resource parameter of the second downlink reference signal, or the generation parameter of the second downlink reference signal; the parameter (A) related to the first downlink reference signal may be the sequence number of the first downlink reference signal, the resource parameter of the first downlink reference signal, or the generation parameter of the first downlink reference signal; and Offset may be the offset of the sequence number of the second downlink reference signal relative to the sequence number of the first downlink reference signal, the offset of the resource parameter of the second downlink reference signal relative to the resource parameter of the first downlink reference signal, or the offset of the generation parameter of the second downlink reference signal relative to the generation parameter of the first downlink reference signal.

In some embodiments, if (A+Offset) is greater than a maximum value (represented by (D-1)) of A, N may be obtained by performing a modulo operation on (A+Offset). For example, assuming that A is a consecutive integer ranging from 0 to (D-1), N may be determined based on the following formula:

$$N = (A + Offset) \bmod D \qquad (2)$$

Alternatively, in some embodiments, the parameter related to the second downlink reference signal may be determined based on the following formula:

$$N = A - Offset \qquad (3)$$

In some embodiments, if (A-Offset) is less than a minimum value of A, N may be obtained by performing a modulo operation on (A-Offset). For example, assuming that A is a consecutive integer ranging from 0 to (D-1), N may be determined based on the following formula:

$$N = (A - Offset) \bmod D \qquad (4)$$

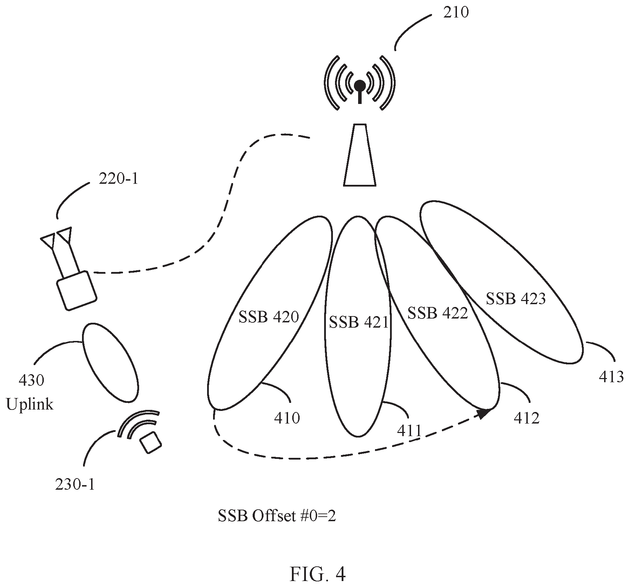

FIG. 4 shows an example of a plurality of parameters for directions of a plurality of uplink transmission beams according to some embodiments of the present disclosure.

In general, in the example shown in FIG. 4, the terminal device 230 receives, from the first network device 210, a plurality of parameters for directions of a plurality of uplink transmission beams, where each parameter is associated with one downlink reference signal of the first network device 210. Further, the terminal device 230 may determine, based on the downlink reference signal and the parameter associated with the downlink reference signal, a downlink reference signal corresponding to an uplink transmission beam, and then determine the uplink transmission beam.

In addition, in the example shown in FIG. 4, the plurality of parameters for the directions of the plurality of uplink transmission beams may include offsets of indexes of a plurality of downlink reference signals corresponding to the plurality of uplink transmission beams relative to indexes of downlink reference signals corresponding to a plurality of downlink transmission beams. The downlink reference signal includes an SSB.

As shown in FIG. 4, downlink transmission beams 410, 411, 412, and 413 of the first network device 210 respectively correspond to SSBs 420, 421, 422, and 423. The SSBs 420, 421, 422, and 423 respectively have indexes 0, 1, 2, and 3.

It should be understood that a quantity of downlink transmission beams and indexes shown in FIG. 4 are merely examples. The first network device 210 may have any appropriate quantity of downlink transmission beams, and SSBs corresponding to these downlink transmission beams may have indexes in any appropriate form. The scope of the present disclosure is not limited in this aspect.

The terminal device 230-1 receives SSB Offset #0, SSB Offset #1, SSB Offset #2, and SSB Offset #3 from the first network device 210. The SSB Offset #0, the SSB Offset #1, the SSB Offset #2, and the SSB Offset #3 are respectively associated with the SSBs 420, 421, 422, and 423. The SSB Offset #0 represents an offset (value of 2) of the index (value of 2) of the SSB 422 relative to the index (value of 0) of the SSB 420. The SSB Offset #1 represents an offset (value of 1) of the index (value of 2) of the SSB 422 relative to the index (value of 1) of the SSB 421. The SSB Offset #2 represents an offset (value of 1) of the index (value of 3) of the SSB 423 relative to the index (value of 2) of the SSB 422. The SSB Offset #3 represents an offset (value of 1) of the index (value of 0) of the SSB 420 relative to the index (value of 3) of the SSB 423.

In some embodiments, the first network device 210 may determine location estimation of the terminal device 230-1. For example, the first network device 210 may determine the location estimation of the terminal device 230-1 through sensing. Further, the first network device 210 may determine the SSB Offset #0, the SSB Offset #1, the SSB Offset #2, and the SSB Offset #3 based on the location estimation.

The first network device 210 transmits the SSBs 420, 421, 422, and 423 in a beam-sweeping manner. The terminal device 230-1 measures strength of the SSBs 420, 421, 422, and 423, and selects an SSB whose strength is greater than a predetermined threshold from the SSBs. For example, if the strength of the SSB 420 is greater than the predetermined threshold, the terminal device 230 may select the SSB 420. In this way, the terminal device 230 may determine the downlink transmission beam 410 corresponding to the SSB 420 as an available downlink transmission beam. Further, the terminal device 230 determines, based on the index (value of 0) of the SSB 420 and the SSB Offset #0, an index of an SSB corresponding to the uplink transmission beam. In some embodiments, the terminal device 230 may determine, based on the following Formula (5), the index of the SSB corresponding to the uplink transmission beam:

$$N_1 = (A_1 + \text{SSB Offset}) \bmod D_1 \qquad\qquad (5)$$

Herein, $N_1$ represents an index of an SSB corresponding to an uplink transmission beam, $A_1$ represents an index of an SSB corresponding to a downlink transmission beam, SSB Offset represents an offset of the index of the SSB corresponding to the uplink transmission beam relative to the index of the SSB corresponding to the downlink transmission beam, $D_1$ represents a maximum value of an index of an SSB transmitted by the first network device 210, and $0 \leq A \leq (D_1 - 1)$. In the example shown in FIG. 4, $D_1 = 4$.

For example, the terminal device 230 determines, based on the foregoing Formula (5), the index of the SSB 420 (that is, $A_1 = 0$), and the SSB Offset #0 (value of 2), the index (value of 2) of the SSB corresponding to the uplink transmission beam, that is, the index of the SSB 422. In this way, the terminal device 230 may determine the downlink transmission beam 412 corresponding to the SSB 422. Further, the terminal device 230 may determine an uplink transmission beam 430 corresponding to the downlink transmission beam 412 as an uplink transmission beam for transmitting an uplink signal to the second network device 220-1.

In the example shown in FIG. 4, the uplink transmission beam of the terminal device 230 may be aligned with the second network device 220-1, thereby resolving a problem of uplink beam management in a scenario in which the second network device 220-1 exists.

Alternatively, the terminal device 230 may receive, from the first network device 210, mapping information between a plurality of parameters for directions of a plurality of uplink transmission beams and a plurality of downlink reference signals corresponding to a plurality of downlink transmission beams, where each parameter is associated with one downlink reference signal. Further, the terminal device 230 may determine, based on the mapping information and one of the plurality of downlink reference signals, a downlink reference signal corresponding to an uplink transmission beam, and then determine the uplink transmission beam. Table 2 shows an example of the foregoing mapping information.

Table 2

| Index of an SSB corresponding to a downlink transmission beam | Offset between indexes of SSBs |
| --- | --- |
| 0 | SSB Offset #0 |
| 1 | SSB Offset #1 |
| 2 | SSB Offset #2 |
| 3 | SSB Offset #3 |

Consider the example in FIG. 4 and Table 2.

As shown in Table 2, the SSB Offset #0, the SSB Offset #1, the SSB Offset #2, and the SSB Offset #3 are respectively mapped to SSBs with indexes 0, 1, 2, and 3. That is, the SSB Offset #0, the SSB Offset #1, the SSB Offset #2, and the SSB Offset #3 are respectively mapped to the SSBs 420, 421, 422, and 423.

The terminal device 230 receives, from the first network device 210, the mapping information shown in Table 2. The first network device 210 transmits the SSBs 420, 421, 422, and 423 in a beam-sweeping manner. The terminal device 230 measures strength of the SSBs 420, 421, 422, and 423, and selects an SSB whose strength is greater than a predetermined threshold from the SSBs. For example, if the strength of the SSB 420 is greater than the predetermined threshold, the terminal device 230 may select the SSB 420. In this way, the terminal device 230 may determine the downlink transmission beam 410 corresponding to the SSB 420 as an available downlink transmission beam. Further, the terminal device 230 determines the SSB Offset #0 based on the index (value of 0) of the SSB 420 and Table 2, and then determines the SSB 421 based on the index (value of 0) of the SSB 420 and the SSB Offset #0. For example, the terminal device 230 may determine, based on the foregoing Formula (5), the index of the SSB 420 (that is, $A_1 = 0$), and the SSB Offset #0 (value of 2), the index (value of 2) of the SSB corresponding to the uplink transmission beam, that is, the index of the SSB 422. In this way, the terminal device 230 may determine the downlink transmission beam 412 corresponding to the SSB 422. Further, the terminal device 230 may determine an uplink transmission beam 430 corresponding to the downlink transmission beam 412 as an uplink transmission beam for transmitting an uplink signal to the second network device 220-1.

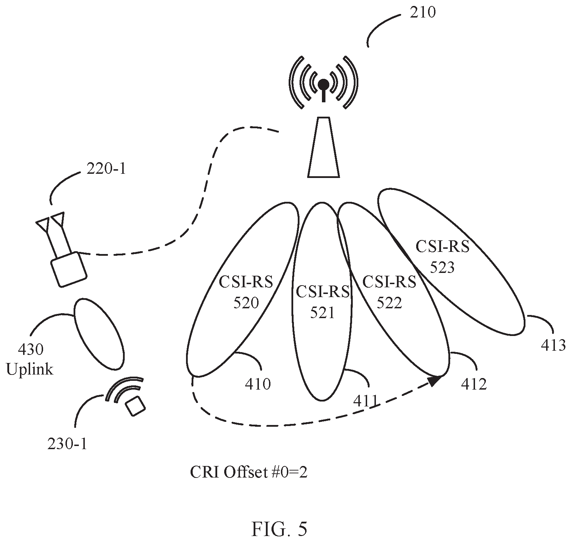

FIG. 5 shows another example of a plurality of parameters for directions of a plurality of uplink transmission beams according to some embodiments of the present disclosure.

The example shown in FIG. 5 is similar to the example shown in FIG. 4. The terminal device 230 receives, from the first network device 210, a plurality of parameters for directions of a plurality of uplink transmission beams, where each parameter is associated with one downlink reference signal of the first network device 210. Further, the terminal device 230 may determine, based on the downlink reference signal and the parameter associated with the downlink reference signal, a downlink reference signal corresponding to an uplink transmission beam, and then determine the uplink transmission beam.

A difference between the example shown in FIG. 5 and the example shown in FIG. 4 lies in that, in the example shown in FIG. 5,

the plurality of parameters for the directions of the plurality of uplink transmission beams may include offsets of resource indicators of a plurality of downlink reference signals corresponding to the plurality of uplink transmission beams relative to resource indicators of downlink reference signals corresponding to a plurality of downlink transmission beams. The downlink reference signal includes a CSI-RS. The resource indicator of the downlink reference signal includes a CSI-RS resource indicator (CSI Resource Indicator, CRI).

As shown in FIG. 5, the downlink transmission beams 410, 411, 412, and 413 of the first network device 210 respectively correspond to CSI-RSs 520, 521, 522, and 523. CRIs of the CSI-RSs 520, 521, 522, and 523 are 0, 1, 2, and 3 respectively.

It should be understood that a quantity of downlink transmission beams and the CRIs shown in FIG. 5 are merely examples. The first network device 210 may have any appropriate quantity of downlink transmission beams, and CSI-RSs corresponding to these downlink transmission beams may have CRIs in any appropriate form. The scope of the present disclosure is not limited in this aspect.

The terminal device 230-1 receives CSI-RS Offset #0, CSI-RS Offset #1, CSI-RS Offset #2, and CSI-RS Offset #3 from the first network device 210. The CSI-RS Offset #0, the CSI-RS Offset #1, the CSI-RS Offset #2, and the CSI-RS Offset #3 are associated with the CSI-RSs 520, 521, 522, and 523 respectively. The CSI-RS Offset #0 represents an offset (value of 2) of the CRI (value of 2) of the CSI-RS 522 relative to the CRI (value of 0) of the CSI-RS 520. The CSI-RS Offset #1 represents an offset (value of 1) of the CRI (value of 2) of the CSI-RS 522 relative to the CRI (value of 1) of the CSI-RS 521. The CSI-RS Offset #2 represents an offset (value of 1) of the CRI (value of 3) of the CSI-RS 523 relative to the CRI (value of 2) of the CSI-RS 522. The CSI-RS Offset #3 represents an offset (value of 1) of the CRI (value of 0) of the CSI-RS 520 relative to the CRI (value of 3) of the CSI-RS 523.

The first network device 210 transmits the CSI-RSs 520, 521, 522, and 523 in a beam-sweeping manner. The terminal device 230 measures strength of the CSI-RSs 520, 521, 522, and 523, and selects a CSI-RS whose strength is greater than a predetermined threshold from the CSI-RSs. For example, if the strength of the CSI-RS 520 is greater than the predetermined threshold, the terminal device 230 may select the CSI-RS 520. In this way, the terminal device 230 may determine the downlink transmission beam 410 corresponding to the CSI-RS 520 as an available downlink transmission beam. Further, the terminal device 230 determines, based on the CRI (value of 0) of the CSI-RS 520 and the CSI-RS Offset #0, a CRI of a CSI-RS corresponding to an uplink transmission beam. In some embodiments, the terminal device 230 may determine, based on the following Formula (6), the CRI of the CSI-RS corresponding to the uplink transmission beam:

$$N_2 = (A_2 + \text{Offset}) \bmod D_2 \qquad\qquad (6)$$

Herein, $N_2$ represents a CRI of a CSI-RS corresponding to an uplink transmission beam, $A_2$ represents a CRI of a CSI-RS corresponding to a downlink transmission beam, CSI-RS Offset represents an offset of the CRI of the CSI-RS corresponding to the uplink transmission beam relative to the CRI of the CSI-RS corresponding to the downlink transmission beam, $D_2$ represents a maximum value of a CRI of a CSI-RS transmitted by the first network device 210, and $0 \leq A_2 \leq (D_2 - 1)$. In the example shown in FIG. 4, $D_2 = 4$.

For example, the terminal device 230 determines, based on the foregoing Formula (6), the CRI (that is, $A_2 = 0$) of the CSI-RS 520, and the CSI-RS Offset #0 (value of 2), the CRI (value of 2) of the CSI-RS corresponding to the uplink transmission beam, that is, the CRI of the CSI-RS 522. In this way, the terminal device 230 may determine the downlink transmission beam 412 corresponding to the CSI-RS 522. Further, the terminal device 230 may determine an uplink transmission beam 430 corresponding to the downlink transmission beam 412 as an uplink transmission beam for transmitting an uplink signal to the second network device 220-1.

In some embodiments, the uplink signal transmitted to the second network device 220-1 may include a sounding reference signal for codebook-based uplink transmission or non-codebook-based uplink transmission.

In the example shown in FIG. 5, the uplink transmission beam of the terminal device 230 may be aligned with the second network device 220-1, thereby resolving a problem of uplink beam management in a scenario in which the second network device 220-1 exists.

In some embodiments, the parameter for the direction of the uplink transmission beam may indicate a downlink reference signal (namely, a "second downlink reference signal") corresponding to the uplink transmission beam or the direction of the uplink transmission beam.

In some embodiments, the parameter for the direction of the uplink transmission beam may indicate the second downlink reference signal corresponding to the uplink transmission beam by one of the following: a sequence number of the second downlink reference signal, a resource parameter of the second downlink reference signal, and a generation parameter of the second downlink reference signal.

In some embodiments, the sequence number of the second downlink reference signal may include one of the following: an index of the second downlink reference signal, a resource indicator of the second downlink reference signal, and a port number of the second downlink reference signal.

In some embodiments, the resource parameter of the second downlink reference signal may include a time domain resource parameter of the second downlink reference signal or a frequency domain resource parameter of the second downlink reference signal.

In some embodiments, the generation parameter of the second downlink reference signal may include a cyclic shift value of the second downlink reference signal or a sequence generation parameter of the second downlink reference signal.

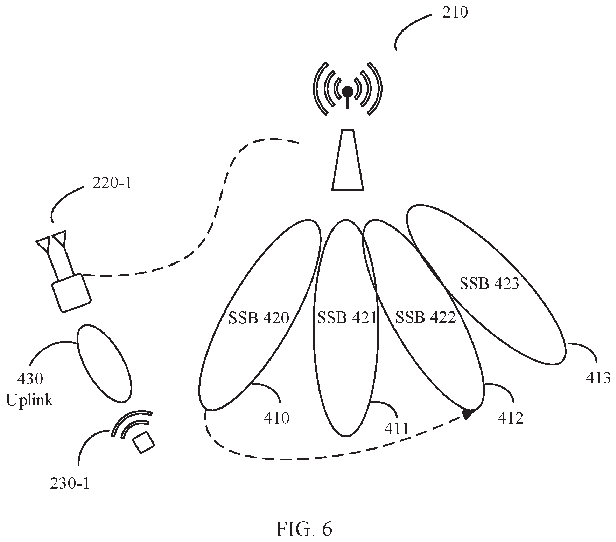

FIG. 6 shows still another example of a plurality of parameters for directions of a plurality of uplink transmission beams according to some embodiments of the present disclosure.

The example shown in FIG. 6 is similar to the example shown in FIG. 4. The terminal device 230 receives, from the first network device 210, a plurality of parameters for directions of a plurality of uplink transmission beams, where each parameter is associated with one downlink reference signal of the first network device 210. Further, the terminal device 230 may determine, based on the downlink reference signal and the parameter associated with the downlink reference signal, a downlink reference signal corresponding to an uplink transmission beam, and then determine the uplink transmission beam.

A difference between the example shown in FIG. 6 and the example shown in FIG. 4 lies in that, in the example shown in FIG. 6, the plurality of parameters for the directions of the plurality of uplink transmission beams may indicate a plurality of downlink reference signals corresponding to the plurality of uplink transmission beams.

As shown in FIG. 6, the downlink transmission beams 410, 411, 412, and 413 of the first network device 210 respectively correspond to the SSBs 420, 421, 422, and 423. The SSBs 420, 421, 422, and 423 respectively have indexes 0, 1, 2, and 3.

The terminal device 230-1 receives indexes (that is, 2, 2, 3, and 0) of the SSBs 422, 422, 423, and 420 from the first network device 210. The indexes of the SSBs 422, 422, 423, and 420 are respectively associated with the SSBs 420, 421, 422, and 423.

The first network device 210 transmits the SSBs 420, 421, 422, and 423 in a beam-sweeping manner. The terminal device 230 measures strength of the SSBs 420, 421, 422, and 423, and selects an SSB whose strength is greater than a predetermined threshold from the SSBs. For example, if the strength of the SSB 420 is greater than the predetermined threshold, the terminal device 230 may select the SSB 420. In this way, the terminal device 230 may determine the downlink transmission beam 410 corresponding to the SSB 420 as an available downlink transmission beam. Further, the terminal device 230 determines, based on the index (value of 0) of the SSB 420, an index (value of 2) of an SSB corresponding to the uplink transmission beam, that is, the index of the SSB 422. In this way, the terminal device 230 may determine the downlink transmission beam 412 corresponding to the SSB 422. Further, the terminal device 230 may determine an uplink transmission beam 430 corresponding to the downlink transmission beam 412 as an uplink transmission beam for transmitting an uplink signal to the second network device 220-1.

In the example shown in FIG. 6, the uplink transmission beam of the terminal device 230 may be aligned with the second network device 220-1, thereby resolving a problem of uplink beam management in a scenario in which the second network device 220-1 exists.

Alternatively, the terminal device 230 may receive, from the first network device 210, mapping information between the plurality of parameters for the directions of the plurality of uplink transmission beams and a plurality of downlink reference signals corresponding to a plurality of downlink transmission beams, where each parameter is associated with one downlink reference signal. Further, the terminal device 230 may determine, based on the mapping information and one of the plurality of downlink reference signals, a downlink reference signal corresponding to an uplink transmission beam, and then determine the uplink transmission beam. Table 3 shows an example of the foregoing mapping information.

Table 3

| Index of an SSB corresponding to a downlink transmission beam | Index of an SSB corresponding to an uplink transmission beam |
|:---:|:---:|
| 0 | 2 |
| 1 | 2 |

(continued)

| Index of an SSB corresponding to a downlink transmission beam | Index of an SSB corresponding to an uplink transmission beam |
|---|---|
| 2 | 3 |
| 3 | 0 |

Consider the example in FIG. 6 and Table 3.

As shown in Table 3, SSBs corresponding to uplink transmission beams respectively have indexes 2, 2, 3, and 0, and are respectively mapped to SSBs that correspond to downlink transmission beams and that have indexes 0, 1, 2, and 3. That is, the SSBs 422, 422, 423, and 420 are respectively mapped to the SSBs 420, 421, 422, and 423.

The terminal device 230 receives, from the first network device 210, the mapping information shown in Table 3. The first network device 210 transmits the SSBs 420, 421, 422, and 423 in a beam-sweeping manner. The terminal device 230 measures strength of the SSBs 420, 421, 422, and 423, and selects an SSB whose strength is greater than a predetermined threshold from the SSBs. For example, if the strength of the SSB 420 is greater than the predetermined threshold, the terminal device 230 may select the SSB 420. In this way, the terminal device 230 may determine the downlink transmission beam 410 corresponding to the SSB 420 as an available downlink transmission beam. Further, the terminal device 230 determines, based on the index (value of 0) of the SSB 420 corresponding to the downlink transmission beam and Table 3, that an index of an SSB corresponding to the uplink transmission beam, that is, the index of the SSB 422, is 2. In this way, the terminal device 230 may determine the downlink transmission beam 412 corresponding to the SSB 422. Further, the terminal device 230 may determine an uplink transmission beam 430 corresponding to the downlink transmission beam 412 as an uplink transmission beam for transmitting an uplink signal to the second network device 220-1.

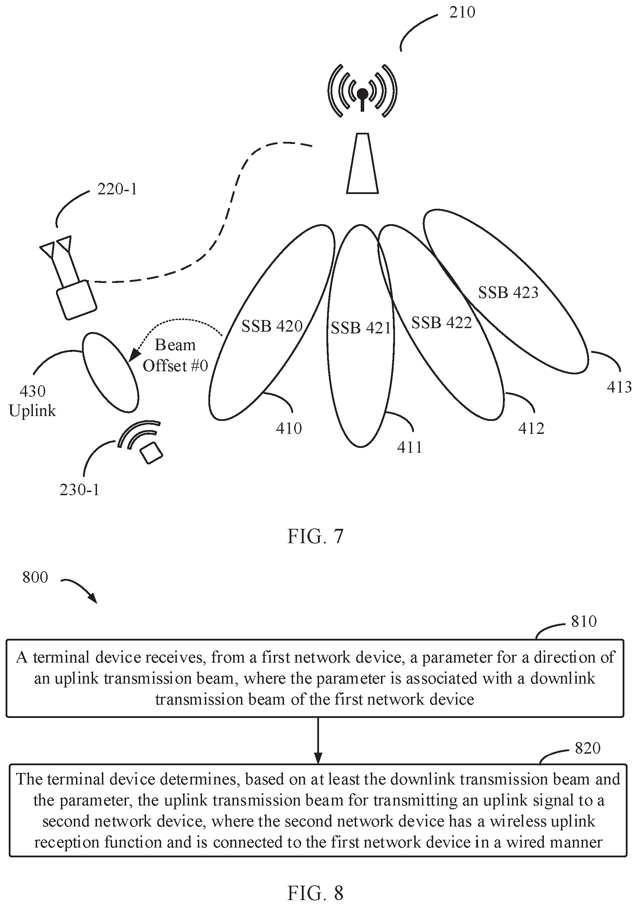

Alternatively, in some embodiments, the parameter for the direction of the uplink transmission beam may include an offset of the direction of the uplink transmission beam relative to a direction of the downlink transmission beam. This will be described with reference to FIG. 7.

FIG. 7 shows yet another example of a plurality of parameters for directions of a plurality of uplink transmission beams according to some embodiments of the present disclosure.

In general, in the example shown in FIG. 7, the terminal device 230 receives, from the first network device 210, a plurality of parameters for directions of a plurality of uplink transmission beams, where each parameter is associated with one downlink transmission beam of the first network device 210. Further, the terminal device 230 may determine, based on the downlink transmission beam and the parameter associated with the downlink transmission beam, a downlink transmission beam corresponding to an uplink transmission beam, and then determine the uplink transmission beam.

In addition, in the example shown in FIG. 7, the plurality of parameters for the directions of the plurality of uplink transmission beams may indicate offsets of the directions of the plurality of uplink transmission beams relative to directions of a plurality of downlink transmission beams.

As shown in FIG. 7, the downlink transmission beams 410, 411, 412, and 413 of the first network device 210 respectively correspond to the SSBs 420, 421, 422, and 423. The SSBs 420, 421, 422, and 423 respectively have indexes 0, 1, 2, and 3.

It should be understood that a quantity of downlink transmission beams and indexes shown in FIG. 7 are merely examples. The first network device 210 may have any appropriate quantity of downlink transmission beams, and SSBs corresponding to these downlink transmission beams may have indexes in any appropriate form. The scope of the present disclosure is not limited in this aspect.

The terminal device 230-1 receives Beam Offset #0, Beam Offset #1, Beam Offset #2 and Beam Offset #3 from the first network device 210. The Beam Offset #0, the Beam Offset #1, the Beam Offset #2 and the Beam Offset #3 are associated with the downlink transmission beams 410, 411, 412, and 413 respectively. The Beam Offset #0 represents an offset of a direction of the downlink transmission beam 412 relative to a direction of the downlink transmission beam 410. The Beam Offset #1 represents an offset of the direction of the downlink transmission beam 412 relative to a direction of the downlink transmission beam 411. The Beam Offset #2 represents an offset of a direction of the downlink transmission beam 413 relative to the direction of the downlink transmission beam 412. The Beam Offset #3 represents an offset of the direction of the downlink transmission beam 410 relative to the direction of the downlink transmission beam 413.

In some embodiments, the first network device 210 may determine location estimation of the terminal device 230-1. For example, the first network device 210 may determine the location estimation of the terminal device 230-1 through sensing. Further, the first network device 210 may determine the Beam Offset #0, the Beam Offset #1, the Beam Offset #2, and the Beam Offset #3 based on the location estimation.

The first network device 210 transmits the SSBs 420, 421, 422, and 423 in a beam-sweeping manner. The terminal device 230 measures strength of the SSBs 420, 421, 422, and 423, and selects an SSB whose strength is greater than a predetermined threshold from the SSBs. For example, if the strength of the SSB 420 is greater than the predetermined threshold, the terminal device 230 may select the SSB 420. In this way, the terminal device 230 may determine the downlink transmission beam 410 corresponding to the SSB 420 as an available downlink transmission beam. Further, the terminal device 230 determines, based on the direction of the downlink transmission beam 410 and the Beam Offset #0, a direction of the downlink transmission beam corresponding to the uplink transmission beam, that is, the direction of the downlink transmission beam 412. Further, the terminal device 230 may determine an uplink transmission beam 430 corresponding to the downlink transmission beam 412 as an uplink transmission beam for transmitting an uplink signal to the second network device 220-1.

In the example shown in FIG. 7, the uplink transmission beam of the terminal device 230 may be aligned with the second network device 220-1, thereby resolving a problem of uplink beam management in a scenario in which the second network device 220-1 exists.

FIG. 8 is a flowchart of a communication method 800 according to some embodiments of the present disclosure. In some embodiments, the method 800 may be implemented by the terminal device 230 in the example communication system 200, for example, may be implemented by a processor or a processing unit of the terminal device 230 in cooperation with another component (for example, a transceiver). In other embodiments, the method 800 may alternatively be implemented by another communication apparatus independent of the example communication system 200.

In block 810, the terminal device 230 receives, from the first network device 210, a parameter for a direction of an uplink transmission beam. The parameter is associated with a downlink transmission beam of the first network device 210.

In block 820, the terminal device 230 determines, based on at least the downlink transmission beam and the parameter, the uplink transmission beam for transmitting an uplink signal to the second network device 220. The second network device 220 has a wireless uplink reception function and is connected to the first network device in a wired manner.

In some embodiments, the parameter for the direction of the uplink transmission beam includes one of the following: an offset of a second downlink reference signal corresponding to the uplink transmission beam relative to a first downlink reference signal corresponding to the downlink transmission beam, and an offset of the direction of the uplink transmission beam relative to a direction of the downlink transmission beam.

In some embodiments, the offset of the second downlink reference signal relative to the first downlink reference signal includes one of the following: an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

In some embodiments, the parameter for the direction of the uplink transmission beam indicates one of the following: a second downlink reference signal corresponding to the uplink transmission beam, and the direction of the uplink transmission beam.

In some embodiments, the parameter for the direction of the uplink transmission beam indicates the second downlink reference signal corresponding to the uplink transmission beam by one of the following: a sequence number of the second downlink reference signal, a resource parameter of the second downlink reference signal, and a generation parameter of the second downlink reference signal.

In some embodiments, each of the first downlink reference signal and the second downlink reference signal includes one of the following: a synchronization signal and physical broadcast channel block, and a channel state information reference signal.

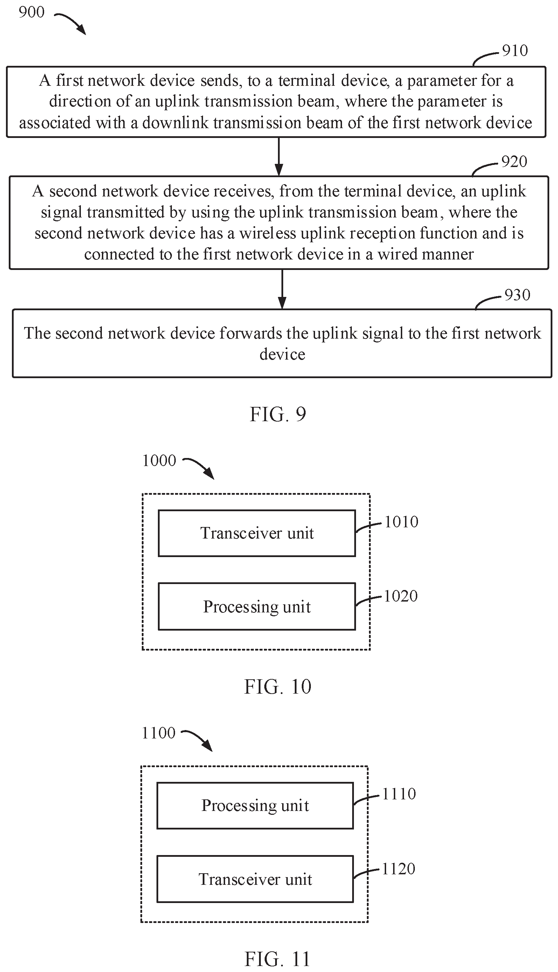

FIG. 9 is a flowchart of a communication method 900 according to some embodiments of the present disclosure. In some embodiments, the method 900 may be implemented by the first network device 210 and the second network device 220 in the example communication system 200, for example, may be implemented by respective processors or processing units of the first network device 210 and the second network device 220 in cooperation with another component (for example, a transceiver). In other embodiments, the method 900 may alternatively be implemented by another communication apparatus independent of the example communication system 200.

In block 910, the first network device 210 transmits, to the terminal device 230, a parameter for a direction of an uplink transmission beam. The parameter is associated with a downlink transmission beam of the first network device 210.

In block 920, the second network device 220 receives, from the terminal device 230, an uplink signal transmitted by using the uplink transmission beam. The second network device 220 has a wireless uplink reception function and is connected to the first network device 210 in a wired manner.

In block 930, the second network device 220 forwards the uplink signal to the first network device 210.

In some embodiments, the parameter for the direction of the uplink transmission beam includes one of the following: an offset of a second downlink reference signal corresponding to the uplink transmission beam relative to a first downlink reference signal corresponding to the downlink transmission beam, and an offset of the direction of the uplink transmission beam relative to a direction of the downlink transmission beam.

In some embodiments, the offset of the second downlink reference signal relative to the first downlink reference signal includes one of the following: an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

In some embodiments, the parameter for the direction of the uplink transmission beam indicates one of the following: a second downlink reference signal corresponding to the uplink transmission beam, and the direction of the uplink transmission beam.

In some embodiments, the parameter for the direction of the uplink transmission beam indicates the second downlink reference signal corresponding to the uplink transmission beam by one of the following: a sequence number of the second downlink reference signal, a resource parameter of the second downlink reference signal, and a generation parameter of the second downlink reference signal.

In some embodiments, each of the first downlink reference signal and the second downlink reference signal includes one of the following: a synchronization signal and physical broadcast channel block, and a channel state information reference signal.

FIG. 10 is a block diagram of a communication apparatus 1000 according to some embodiments of the present disclosure. The communication apparatus 1000 may be implemented as a device or a chip in the device. The scope of the present disclosure is not limited in this aspect. The communication apparatus 1000 may include a plurality of units, to perform corresponding steps in the method 800 discussed in FIG. 8. The communication apparatus 1000 may be implemented as the terminal device 230 shown in FIG. 2 or a part of the terminal device 230.

As shown in FIG. 10, the communication apparatus 1000 includes a transceiver unit 1010 and a processing unit 1020.

The transceiver unit 1010 is configured to receive, from a first network device, a parameter for a direction of an uplink transmission beam. The parameter is associated with a downlink transmission beam of the first network device. For example, the transceiver unit 1010 is configured to perform the action 310 in the embodiment shown in FIG. 3.

For example, the transceiver unit 1010 may include a sending unit and a receiving unit. The receiving unit is configured to receive, from the first network device, the parameter for the direction of the uplink transmission beam. The parameter is associated with the downlink transmission beam of the first network device. For example, the receiving unit is configured to perform the action 310 in the embodiment shown in FIG. 3.

The processing unit 1020 is configured to determine, based on at least the downlink transmission beam and the parameter, the uplink transmission beam for transmitting an uplink signal to a second network device. The second network device has a wireless uplink reception function and is connected to the first network device in a wired manner. For example, the processing unit 1020 is configured to perform the action 320 in the embodiment shown in FIG. 3. In some embodiments, the parameter for the direction of the uplink transmission beam includes one of the following: an offset of a second downlink reference signal corresponding to the uplink transmission beam relative to a first downlink reference signal corresponding to the downlink transmission beam, and an offset of the direction of the uplink transmission beam relative to a direction of the downlink transmission beam.

In some embodiments, the offset of the second downlink reference signal relative to the first downlink reference signal includes one of the following: an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

In some embodiments, the parameter for the direction of the uplink transmission beam indicates one of the following: a second downlink reference signal corresponding to the uplink transmission beam, and the direction of the uplink transmission beam.

In some embodiments, the parameter for the direction of the uplink transmission beam indicates the second downlink reference signal corresponding to the uplink transmission beam by one of the following: a sequence number of the second downlink reference signal, a resource parameter of the second downlink reference signal, and a generation parameter of the second downlink reference signal.

In some embodiments, each of the first downlink reference signal and the second downlink reference signal includes one of the following: a synchronization signal and physical broadcast channel block, and a channel state information reference signal.

FIG. 11 is a block diagram of a communication apparatus 1100 according to some embodiments of the present disclosure. The communication apparatus 1100 may be implemented as a device or a chip in the device. The scope of the present disclosure is not limited in this aspect. The communication apparatus 1100 may include a plurality of units, to perform corresponding steps in the method 900 discussed in FIG. 9. The communication apparatus 1100 may be implemented as the first network device 220 shown in FIG. 2 or a part of the first network device 220.

As shown in FIG. 11, the communication apparatus 1100 includes a processing unit 1110 and a transceiver unit 1120.

The processing unit 1110 is configured to determine a parameter for a direction of an uplink transmission beam.

The parameter is associated with a downlink transmission beam of a first network device.

The transceiver unit 1120 is configured to send, to a terminal device, the parameter for the direction of the uplink transmission beam. For example, the transceiver unit 1120 is configured to perform the action 310 in the embodiment shown in FIG. 3.

In some embodiments, the parameter for the direction of the uplink transmission beam includes one of the following: an offset of a second downlink reference signal corresponding to the uplink transmission beam relative to a first downlink reference signal corresponding to the downlink transmission beam, and an offset of the direction of the uplink transmission beam relative to a direction of the downlink transmission beam.

In some embodiments, the offset of the second downlink reference signal relative to the first downlink reference signal includes one of the following: an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

In some embodiments, the parameter for the direction of the uplink transmission beam indicates one of the following: a second downlink reference signal corresponding to the uplink transmission beam, and the direction of the uplink transmission beam.

In some embodiments, the parameter for the direction of the uplink transmission beam indicates the second downlink reference signal corresponding to the uplink transmission beam by one of the following: a sequence number of the second downlink reference signal, a resource parameter of the second downlink reference signal, and a generation parameter of the second downlink reference signal.

In some embodiments, each of the first downlink reference signal and the second downlink reference signal includes one of the following: a synchronization signal and physical broadcast channel block, and a channel state information reference signal.

The present disclosure further provides a communication apparatus 1200. The communication apparatus 1200 may be a terminal device, a processor in a terminal device, or a chip. The communication apparatus 1200 may be configured to perform an operation performed by the terminal device in the foregoing method embodiments.

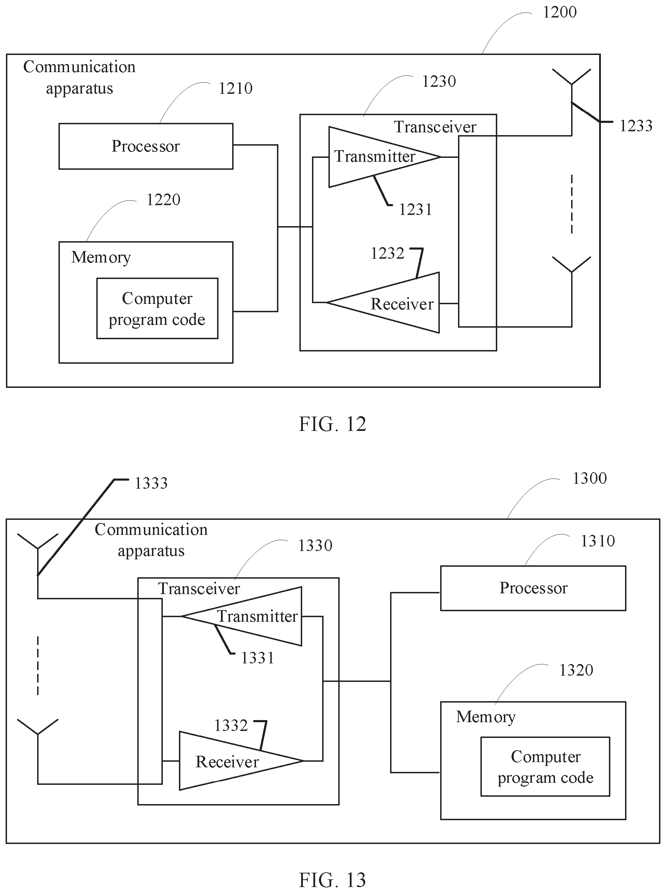

When the communication apparatus 1200 is the terminal device, FIG. 12 is a diagram of a simplified structure of the terminal device. As shown in FIG. 12, the terminal device includes a processor, a memory, and a transceiver.

The memory may store computer program code. The transceiver includes a transmitter 1231, a receiver 1232, a radio frequency circuit (not shown in the figure), an antenna 1233, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to: receive and send a radio frequency signal in a form of an electromagnetic wave. The input/output apparatus, for example, a touchscreen, a display, or a keyboard, is mainly configured to: receive data input by a user and output data to the user. It should be noted that terminal devices of some types may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives a radio frequency signal through the antenna, converts the radio frequency signal into a baseband signal, and outputs the baseband signal to the processor. The processor converts the baseband signal into data, and processes the data. For ease of description, FIG. 12 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of the present disclosure.

In embodiments of the present disclosure, the antenna and the radio frequency circuit that have receiving and sending functions may be considered as a transceiver module of the terminal device, and the processor that has a processing function may be considered as a processing module of the terminal device.

As shown in FIG. 12, the terminal device includes a processor 1210, a memory 1220, and a transceiver 1230. The processor 1210 may also be referred to as a processing unit, a processing board, a processing module, a processing apparatus, or the like. The transceiver 1230 may also be referred to as a transceiver unit, a transceiver machine, a transceiver apparatus, or the like.

Optionally, a component configured to implement a receiving function in the transceiver 1230 may be considered as a receiving module, and a component configured to implement a sending function in the transceiver 1230 may be considered as a sending module. In other words, the transceiver 1230 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

The processor 1201 is configured to perform an action on the terminal device side in embodiments shown in FIG. 3 to FIG. 8, and the transceiver 1230 is configured to perform receiving and sending actions on the terminal device side in embodiments shown in FIG. 3 to FIG. 8. For example, the processor 1201 is configured to perform the action 320 in the embodiment shown in FIG. 3. The transceiver 1230 is configured to perform the actions 310 and 330 in the embodiment shown in FIG. 3. For example, the receiver may perform the action 310 in the embodiment shown in FIG. 3, and the transmitter may perform the action 330 in the embodiment shown in FIG. 3.

It should be understood that FIG. 12 is merely an example rather than a limitation. The terminal device including the transceiver module and the processing module may not depend on the structure shown in FIG. 12.

When the communication apparatus 1200 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

The present disclosure further provides a communication apparatus 1300. The communication apparatus 1300 may be a network device or a chip. The communication apparatus 1300 may be configured to perform an operation performed by a network device in any one of embodiments shown in FIG. 3 to FIG. 7 and FIG. 9.

When the communication apparatus 1300 is a network device, for example, a base station, FIG. 13 is a diagram of a simplified structure of the base station. The base station includes a part 1310, a part 1320, and a part 1330. The part 1310 is mainly configured to: perform baseband processing, control the base station, and the like. The part 1310 is usually a control center of the base station, may be usually referred to as a processor, and is configured to control the base station to perform a processing operation on a network device side in the foregoing method embodiments. The part 1320 is mainly configured to store computer program code and data. The part 1330 is mainly configured to: receive and send a radio frequency signal, and perform conversion between the radio frequency signal and a baseband signal. The part 1330 may be usually referred to as a transceiver module, a transceiver machine, a transceiver circuit, a transceiver, or the like. The transceiver module in the part 1330 may also be referred to as a transceiver machine, a transceiver, or the like, and includes an antenna 1333 and a radio frequency circuit (not shown in the figure). The radio frequency circuit is mainly configured to perform radio frequency processing. Optionally, a component configured to implement a receiving function in the part 1330 may be considered as a receiver machine, and a component configured to implement a sending function in the part 1330 may be considered as a transmitter machine. In other words, the part 1330 includes a receiver machine 1332 and a transmitter machine 1331. The receiver machine may also be referred to as a receiving module, a receiver, a receiver circuit, or the like, and the transmitter machine may be referred to as a transmitting module, a transmitter, a transmitter circuit, or the like.

The part 1310 and the part 1320 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, or a plurality of boards share one or more memories, or a plurality of boards share one or more processors at the same time.

For example, the transceiver module in the part 1330 is configured to perform a receiving and sending-related process performed by the first network device in the embodiment shown in FIG. 3. The processor in the part 1310 is configured to perform a processing-related process performed by the first network device in the embodiment shown in FIG. 3.

It should be understood that FIG. 13 is merely an example rather than a limitation. The network device including the processor, the memory, and the transceiver may not depend on the structure shown in FIG. 13.

When the communication apparatus 1300 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

The present disclosure further provides a communication device. The communication device includes a processor and a memory. The memory includes computer program code. When the computer program code is run by the processor, the method performed by the terminal device or the network device in the foregoing method embodiments is implemented.

The present disclosure further provides a computer-readable storage medium. The computer-readable storage medium stores a computer program. When the computer program is executed by a processor, the method performed by the terminal device or the network device in the foregoing method embodiments is implemented.

The present disclosure further provides a computer program product including instructions. The computer program product is configured to: when the instructions are executed by a device, cause the device to implement the method performed by the terminal device or the network device in the foregoing method embodiments.

The present disclosure further provides a communication system. The communication system includes the terminal device in the foregoing embodiments and the first network device and the second network device in the foregoing embodiments.

The present disclosure further provides a chip, including a processing circuit. The processing circuit is configured to implement the method performed by the terminal device or the network device in the foregoing method embodiments.

In some embodiments, an input of the chip corresponds to a receiving operation in any one of embodiments shown in FIG. 3 to FIG. 9, and an output of the chip corresponds to a sending operation in any one of embodiments shown in FIG. 3 to FIG. 9.

Optionally, the processor is coupled to a memory through an interface.

Optionally, the chip further includes the memory, and the memory stores a computer program or computer instructions.

The processor mentioned in any one of the foregoing descriptions may be a general-purpose central processing unit, a microprocessor, an application-specific integrated circuit (application-specific integrated circuit, ASIC), or one or more integrated circuits configured to control program execution of the method provided in any one of embodiments shown in FIG. 4, FIG. 5, and FIG. 8 to FIG. 10. The memory mentioned in any one of the foregoing descriptions may be a read-only memory (read-only memory, ROM), another type of static storage device that can store static information and instructions, a random access memory (random access memory, RAM), or the like.

It may be clearly understood by persons skilled in the art that, for the purpose of convenient and brief description, for explanations and beneficial effects of related content in any communication apparatus provided above, refer to corresponding method embodiments provided above. Details are not described herein again.

In the several embodiments provided in the present disclosure, it should be understood that the disclosed system, apparatus, and method may be implemented in other manners. For example, the described apparatus embodiments are merely examples. For example, division into the units is merely logical function division and may be other division in actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of the present disclosure may be integrated into one processing unit, or each of the units may exist alone physically, or two or more units may be integrated into one unit. The integrated unit may be implemented in a form of hardware, or may be implemented in a form of a software functional unit.

When the integrated unit is implemented in the form of the software functional unit and sold or used as an independent product, the integrated unit may be stored in a computer-readable storage medium. Based on such an understanding, an essentially contributing part in the technical solutions of the present disclosure, or all or some of the technical solutions may be implemented in a form of a software product. The computer software product is stored in a storage medium and includes a plurality of instructions for instructing a computer device (which may be a personal computer, a server, or a network device) to perform all or some of the steps of the methods in embodiments of the present disclosure. The foregoing storage medium includes any medium that can store program code, such as a USB flash drive, a removable hard disk, a ROM, a RAM, a magnetic disk, or an optical disc.

In conclusion, the foregoing embodiments are merely intended for describing the technical solutions of the present disclosure, rather than limiting the present disclosure. Although the present disclosure is described in detail with reference to the foregoing embodiments, persons of ordinary skill in the art should understand that they may still make modifications to the technical solutions described in the foregoing embodiments or make equivalent replacements to some technical features thereof, without departing from the scope of the technical solutions of embodiments of the present disclosure.

**Claims**

1. A communication method, comprising:

receiving, by a terminal device from a first network device, a parameter for a direction of an uplink transmission beam, wherein the parameter is associated with a downlink transmission beam of the first network device; and determining, by the terminal device based on at least the downlink transmission beam and the parameter, the uplink transmission beam for transmitting an uplink signal to a second network device, wherein the second network device has a wireless uplink reception function and is connected to the first network device in a wired manner.

2. The method according to claim 1, wherein the parameter comprises one of the following:

an offset of a second downlink reference signal corresponding to the uplink transmission beam relative to a first downlink reference signal corresponding to the downlink transmission beam; and an offset of the direction of the uplink transmission beam relative to a direction of the downlink transmission beam.

3. The method according to claim 2, wherein the offset of the second downlink reference signal relative to the first downlink reference signal comprises one of the following:

an offset of a sequence number of the second downlink reference signal relative to a sequence number of the first downlink reference signal, an offset of a resource parameter of the second downlink reference signal relative to a resource parameter of the first downlink reference signal, and an offset of a generation parameter of the second downlink reference signal relative to a generation parameter of the first downlink reference signal.

4. The method according to claim 1, wherein the parameter indicates one of the following:

a second downlink reference signal corresponding to the uplink transmission beam; and the direction of the uplink transmission beam.

5. The method according to claim 4, wherein the parameter indicates the second downlink reference signal corresponding to the uplink transmission beam by one of the following:

a sequence number of the second downlink reference signal, a resource parameter of the second downlink reference signal, and a generation parameter of the second downlink reference signal.

6. The method according to claim 2, wherein each of the first downlink reference signal and the second downlink reference signal comprises one of the following:

a synchronization signal and physical broadcast channel block, and a channel state information reference signal.

7. A communication method, comprising:

sending, by a first network device to a terminal device, a parameter for a direction of an uplink transmission beam, wherein the parameter is associated with a downlink transmission beam of the first network device; receiving, by a second network device from the terminal device, an uplink signal transmitted by using the uplink transmission beam, wherein the second network device has a wireless uplink reception function and is connected to the first network device in a wired manner; and forwarding, by the second network device, the uplink signal to the first network device.

8. The method according to claim 7, wherein the parameter comprises one of the following:

an offset of a second downlink reference signal corresponding to the uplink transmission beam relative to a first downlink reference signal corresponding to the downlink transmission beam; and an offset of the direction of the uplink transmission beam relative to a direction of the downlink transmission beam.

9. The method according to claim 8, wherein the offset of the second downlink reference signal relative to the first downlink reference signal comprises one of the following:

an offset of a sequence number of the second downlink reference signal relative to a sequence number of the first downlink reference signal,
an offset of a resource parameter of the second downlink reference signal relative to a resource parameter of the first downlink reference signal, and
an offset of a generation parameter of the second downlink reference signal relative to a generation parameter of the first downlink reference signal.

10. The method according to claim 7, wherein the parameter indicates one of the following:

a second downlink reference signal corresponding to the uplink transmission beam; and
the direction of the uplink transmission beam.

11. The method according to claim 10, wherein the parameter indicates the second downlink reference signal corresponding to the uplink transmission beam by one of the following:

a sequence number of the second downlink reference signal,
a resource parameter of the second downlink reference signal, and
a generation parameter of the second downlink reference signal.

12. The method according to claim 8, wherein each of the first downlink reference signal and the second downlink reference signal comprises one of the following:

a synchronization signal and physical broadcast channel block, and
a channel state information reference signal.

13. A communication apparatus, comprising:

a transceiver unit, configured to receive, from a first network device, a parameter for a direction of an uplink transmission beam, wherein the parameter is associated with a downlink transmission beam of the first network device; and
a processing unit, configured to determine, based on at least the downlink transmission beam and the parameter, the uplink transmission beam for transmitting an uplink signal to a second network device, wherein the second network device has a wireless uplink reception function and is connected to the first network device in a wired manner.

14. A communication apparatus, comprising:

a processing unit, configured to determine a parameter for a direction of an uplink transmission beam, wherein the parameter is associated with a downlink transmission beam of the first network device; and
a transceiver unit, configured to send, to a terminal device, the parameter for the direction of the uplink transmission beam.

15. A communication device, comprising:

a processor; and
a memory, comprising computer program code, wherein
when the computer program code is run by the processor, the method according to any one of claims 1 to 6 or 7 to 12 is caused to be performed.

16. A computer-readable storage medium, wherein the computer-readable storage medium stores a computer program, and when the computer program is executed by a processor, the method according to any one of claims 1 to 6 or 7 to 12 is implemented.

17. A chip, wherein the chip comprises a processing circuit, and the processing circuit is configured to cause the method according to any one of claims 1 to 6 or 7 to 12 to be performed.

FIG. 1

FIG. 2

FIG. 3

FIG. 4

FIG. 5

210

220-1

SSB 423

SSB 420  SSB 421  SSB 422

413

430
Uplink

410

411

412

230-1

FIG. 6

FIG. 7

FIG. 8

900

910

A first network device sends, to a terminal device, a parameter for a direction of an uplink transmission beam, where the parameter is associated with a downlink transmission beam of the first network device

920

A second network device receives, from the terminal device, an uplink signal transmitted by using the uplink transmission beam, where the second network device has a wireless uplink reception function and is connected to the first network device in a wired manner

930

The second network device forwards the uplink signal to the first network device

FIG. 9

1000

Transceiver unit — 1010

Processing unit — 1020

FIG. 10

1100

Processing unit — 1110

Transceiver unit — 1120

FIG. 11

1200

Communication
apparatus

1210

Processor

1220

Memory

Computer
program code

1230

Transceiver

Transmitter

1231

1232

Receiver

1233

FIG. 12

1333

1300

Communication
apparatus

1330

Transceiver

Transmitter

1331

1332

Receiver

1310

Processor

1320

Memory

Computer
program code

FIG. 13

## INTERNATIONAL SEARCH REPORT

| International application No. |
|---|
| **PCT/CN2023/127345** |

| A. | CLASSIFICATION OF SUBJECT MATTER |
|---|---|

H04W72/044(2023.01)i

According to International Patent Classification (IPC) or to both national classification and IPC

| B. | FIELDS SEARCHED |
|---|---|

Minimum documentation searched (classification system followed by classification symbols)

IPC: H04W

Documentation searched other than minimum documentation to the extent that such documents are included in the fields searched

Electronic data base consulted during the international search (name of data base and, where practicable, search terms used)

CNABS; CNTXT; VEN; USTXT; WOTXT; EPTXT; CNKI; IEEE; 3GPP: 上行, 下行, 发送波束, 网络设备, 有线, 无线资源控制消息, 参数, 方向, 参考信号, 偏移, 序号, 资源参数, 生成参数, uplink, UL, downlink, DL, transmit beam, Tx beam, network equipment, wired, RRC, reference signal, RS, offset, sequence numbers, resource parameters, generation parameters, DCI, UL Only, offset, CSI

| C. | DOCUMENTS CONSIDERED TO BE RELEVANT |
|---|---|

| Category* | Citation of document, with indication, where appropriate, of the relevant passages | Relevant to claim No. |
|---|---|---|
| X | CN 108633006 A (CHINA ACADEMY OF TELECOMMUNICATIONS TECHNOLOGY) 09 October 2018 (2018-10-09) description, paragraphs [0102]-[0279] | 14 |
| A | CN 109495151 A (SONY CORP.) 19 March 2019 (2019-03-19) entire document | 1-17 |
| A | CN 114126054 A (DATANG MOBILE COMMUNICATIONS EQUIPMENT CO., LTD.) 01 March 2022 (2022-03-01) entire document | 1-17 |
| A | CN 114286359 A (HUAWEI TECHNOLOGIES CO., LTD.) 05 April 2022 (2022-04-05) entire document | 1-17 |
| A | CN 115915374 A (GUANGDONG OPPO MOBILE TELECOMMUNICATIONS CORP., LTD.) 04 April 2023 (2023-04-04) entire document | 1-17 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **10 July 2024** | **17 July 2024** |

| Name and mailing address of the ISA/CN | Authorized officer |
|---|---|
| **China National Intellectual Property Administration (ISA/ CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
|---|
| **PCT/CN2023/127345** |

### C. DOCUMENTS CONSIDERED TO BE RELEVANT

| Category* | Citation of document, with indication, where appropriate, of the relevant passages | Relevant to claim No. |
|---|---|---|
| A | US 2020313823 A1 (FUJITSU LTD.) 01 October 2020 (2020-10-01)<br>entire document | 1-17 |

## INTERNATIONAL SEARCH REPORT
**Information on patent family members**

International application No.

**PCT/CN2023/127345**

| Patent document cited in search report | | | Publication date (day/month/year) | Patent family member(s) | | | Publication date (day/month/year) |
|---|---|---|---|---|---|---|---|
| CN | 108633006 | A | 09 October 2018 | JP | 2020512748 | A | 23 April 2020 |
| | | | | JP | 7273719 | B2 | 15 May 2023 |
| | | | | WO | 2018166345 | A1 | 20 September 2018 |
| | | | | US | 2021120536 | A1 | 22 April 2021 |
| | | | | US | 11510203 | B2 | 22 November 2022 |
| | | | | KR | 20190132427 | A | 27 November 2019 |
| | | | | KR | 102329571 | B1 | 22 November 2021 |
| | | | | EP | 3585116 | A1 | 25 December 2019 |
| | | | | EP | 3585116 | A4 | 26 February 2020 |
| CN | 109495151 | A | 19 March 2019 | WO | 2019052400 | A1 | 21 March 2019 |
| | | | | EP | 3683978 | A4 | 22 July 2020 |
| | | | | KR | 20200054198 | A | 19 May 2020 |
| | | | | US | 2020186231 | A1 | 11 June 2020 |
| | | | | US | 11265069 | B2 | 01 March 2022 |
| | | | | JP | 2020533842 | A | 19 November 2020 |
| | | | | JP | 7192855 | B2 | 20 December 2022 |
| CN | 114126054 | A | 01 March 2022 | None | | | |
| CN | 114286359 | A | 05 April 2022 | None | | | |
| CN | 115915374 | A | 04 April 2023 | None | | | |
| US | 2020313823 | A1 | 01 October 2020 | JP | 2021510951 | A | 30 April 2021 |
| | | | | WO | 2019157663 | A1 | 22 August 2019 |

Form PCT/ISA/210 (patent family annex) (July 2022)